# EUROPÄISCHE PATENTSCHRIFT

(11) **EP 4 231 112 B1**
(45) Veröffentlichungstag und Bekanntmachung des Hinweises auf die Patenterteilung: **22.05.2024**
(21) Anmeldenummer: 22157756.2
(22) Anmeldetag: 21.02.2022
(51) Int. Cl.: G05D 23/13

(54) **THERMOSTATKARTUSCHE**
THERMOSTATIC CARTRIDGE
CARTOUCHE DE THERMOSTAT

(43) Veröffentlichungstag der Anmeldung: 23.08.2023
(60) Teilanmeldung: 24162556.5
(73) Patentinhaber: Ideal Standard International NV, 1935 Zaventem (BE)
(72) Erfinder: SCHNEIDER, Hermann-Josef, SCHWEICH 54338 (DE); WINTERSCHEID, Clemens, HONTHEIM 54538 (DE)
(74) Vertreter: Feucker, Max Martin

(56) Entgegenhaltungen:
- EP-A2- 2 048 564
- EP-A2- 2 628 985
- US-A- 5 344 067

## Beschreibung

Die vorliegende Erfindung betrifft eine Thermostatkartusche mit einem Kaltwassereinlass, einem Heißwassereinlass, einem Mischwasserauslass, einem Mischwasserraum, wobei der Mischwasserraum zwischen Kaltwassereinlass sowie Heißwassereinlass einerseits und dem Mischwasserauslass andererseits ausgebildet ist, einem in dem Mischwasserraum angeordneten Dehnstoffelement und einer von dem Dehnstoffelement beaufschlagten Regelhülse.

Solche Thermostatkartuschen sind dafür vorgesehen, dass ein Benutzer eine Mischwassertemperatur einstellt, welche von der Thermostatkartusche unabhängig von der Temperatur des Kaltwassers und des Heißwassers eingehalten wird. Hierzu liegt in der Regel das Dehnstoffelement unmittelbar oder mittelbar an einem Stellelement an, welches zur Einstellung der vorgegebenen Mischwassertemperatur von einem Benutzer insbesondere in axialer Richtung des Dehnstoffelements verstellt werden kann. Das Dehnstoffelement ist mit einer Regelhülse gekoppelt, mit der der Zufluss von Heißwasser und Kaltwasser in den Mischwasserraum geregelt wird. Da die Stellung der Regelhülse mit dem Ausdehnungszustand des Dehnstoffelements korrespondiert, ist in an sich bekannter Weise sichergestellt, dass bei Temperaturschwankungen des Heißwassers und des Kaltwassers die gewünschte Mischwassertemperatur beibehalten wird.

Eine solche Thermostatkartusche ist beispielsweise aus EP 3 273 319 A1 bekannt. Bei den bekannten Thermostatkartuschen sind die Steuerkanten der Regelhülse durch die axialen Stirnenden der Regelhülse ausgebildet. Den beiden axialen Stirnenden der Regelhülse ist in axialer Richtung jeweils ein Anschlag zugeordnet, wobei im Regelbetrieb jeweils ein Spalt zwischen den die Steuerkanten ausbildenden Stirnenden und dem zugehörigen Anschlag ausgebildet ist. Durch die Größe des jeweiligen Spalts wird also die Menge des in den Mischwasserraum fließenden Heiß- und Kaltwassers eingestellt. Ist nun gewünscht, dass ausschließlich Heißwasser (beispielsweise für eine Desinfektion) oder ausschließlich Kaltwasser in den Mischwasserraum einfließt, so wird das Stellelement für das Dehnstoffelement von einem Benutzer entsprechend versetzt. Hierbei gelangt das eine Stirnende der Regelhülse an den zugehörigen Anschlag, sodass das Einströmen von Kaltwasser oder Heißwasser in den Mischwasserraum unterbunden ist. Da in dieser Stellung die Regelhülse in ihrer Bewegung in eine Richtung durch Anlage des entsprechenden Stirnendes an dem zugehörigen Anschlag blockiert ist, wirken weiterhin Kräfte auf das Dehnstoffelement ein. Um diese Kräfte zu minimieren, schlägt EP 3 273 319 A1 einen Schließadapter vor. Es ist zudem bekannt, Überhubeinheiten zur Kompensation dieser Kräfte vorzusehen. Sowohl ein solcher Schließadapter als auch eine Überhubeinheit bedeuten aber einen hohen apparativen Aufwand, um die auf das Dehnstoffelement wirkenden Kräfte zur Vergrößerung seiner Lebensdauer zu minimieren.

Eine Thermostatkartusche mit den Merkmalen des Oberbegriffs des Anspruchs 1 ist aus US 5,344,067 bekannt, bei welcher Dichtungen zwischen der Einlasshülse und der Regelhülse erforderlich sind.

Aufgabe der vorliegenden Erfindung ist daher, die mit Bezug zum Stand der Technik geschilderten Nachteile zu beseitigen und insbesondere eine Thermostatkartusche anzugeben, mit der die Lebensdauer des Dehnstoffelements ohne hohen Aufwand erhöht ist und Leckage von Heißwasser oder Kaltwasser minimiert werden kann.

Eine Lösung für diese Aufgabe ist mit der Thermostatkartusche mit den Merkmalen des unabhängigen Anspruchs angegeben. Weitere Lösungen und vorteilhafte Weiterbildungen sind den abhängigen Ansprüchen und der vorstehenden und nachfolgenden Beschreibung zu entnehmen, wobei einzelne Merkmale der Weiterbildungen in technisch sinnvoller Weise miteinander kombinierbar sind.

Gelöst wird die Aufgabe insbesondere durch eine Thermostatkartusche mit den eingangs genannten Merkmalen, wobei in der Regelhülse mindestens eine Durchtrittsöffnung ausgebildet ist, durch die Heißwasser oder Kaltwasser in den Mischwasserraum treten kann. Es ist bevorzugt, dass die Regelhülse mindestens eine Heißwasserdurchtrittsöffnung und mindestens eine Kaltwasserdurchtrittsöffnung ausbildet.

Während im Stand der Technik vorgesehen ist, dass das zu dem Mischwasserraum fließende Heiß- und Kaltwasser an einem entsprechenden axialen Stirnende der Regelhülse entlang fließt, schlägt die vorliegende Erfindung sinngemäß vor, dass zumindest das Heißwasser oder das Kaltwasser durch eine entsprechende Öffnung insbesondere in der Mantelfläche der Regelhülse hindurchfließt. Die Durchtrittsöffnung ist also eine Aussparung, welche sich von einer äußeren Oberfläche der Regelhülse durch die Regelhülse hindurch zu einer inneren Oberfläche der Regelhülse erstreckt. Mit anderen Worten: Die Erfindung sieht in ihrem Grundgedanken vor, dass die Steuerkante der Regelhülse nicht an einem stirnseitigen Ende der Regelhülse, sondern durch eine Begrenzung einer Öffnung in der Regelhülse ausgebildet ist. Dies hat den Vorteil, dass die Regelhülse in einer den Kaltwassereinlass oder den Heißwassereinlass versperrenden Stellung nicht an einem Gegenanschlag anliegen muss, sondern auch in dieser Stellung noch in beide Richtungen entlang der axialen Achse beweglich ist. Insofern wirken keine übermäßig großen Kräfte auf das Dehnstoffelement, wenn sich die Regelhülse in der einen Einlass versperrenden Stellung befindet.

Es ist bevorzugt, dass in diesem Zusammenhang der Kaltwassereinlass und der Heißwassereinlass jeweils durch mindestens eine Einlassöffnung ausgebildet sind. Ein die Einlassöffnungen aufweisende Bauteil weist also mit den Begrenzungen der Einlassöffnungen ebenfalls Steuerkanten auf, entlang der die Regelhülse mit ihrer mindestens einen Durchtrittsöffnung axial beweglich ist.

Erfindungsgemäß sind der Kaltwassereinlass und der Heißwassereinlass durch eine Einlasshülse ausgebildet sind. In diesem Fall weist die Einlasshülse mindestens eine Kaltwassereinlassöffnung und mindestens eine Heißwassereinlassöffnung auf. Die Einlassöffnungen sind insbesondere als Aussparungen in der Einlasshülse ausgebildet.

Bevorzugt ist der mindestens einen Kaltwassereinlassöffnung der Einlasshülse die mindestens eine Kaltwasserdurchtrittsöffnung der Regelhülse zugeordnet, während der mindestens einen Heißwassereinlassöffnung die mindestens eine Heißwasserdurchtrittsöffnung der Regelhülse zugeordnet ist. Somit können bevorzugt alle Durchtrittsöffnungen der Regelhülse in einem einteiligen Bauteil und alle Einlassöffnungen der Einlasshülse in einem einteiligen Bauteil verwirklicht sein, sodass die Anzahl der Bauteile gering ist.

Bevorzugt ist die mindestens eine Heißwasserdurchtrittsöffnung in axialer Richtung versetzt zu der mindestens einen Kaltwasserdurchtrittsöffnung in der Regelhülse angeordnet, wobei ferner bevorzugt ist, dass die mindestens eine Kaltwassereinlassöffnung in axialer Richtung versetzt zu der mindestens einen Heißwassereinlassöffnung der Einlasshülse angeordnet ist. Der Heißwassereinlass und der Kaltwassereinlass sind somit räumlich in axialer Richtung getrennt voneinander angeordnet, so dass eine einfache Trennung der Kalt- und Heißwasserzuführung möglich ist.

Prinzipiell ist es ausreichend, wenn nur eine Durchtrittsöffnung vorgesehen ist oder insbesondere genau eine Heißwasserdurchtrittsöffnung und genau eine Kaltwasserdurchtrittsöffnung in der Regelhülse vorgesehen sind. Bevorzugt ist aber, dass mehrere Heißwasserdurchtrittsöffnungen in Umfangsrichtung hintereinander angeordnet sind und mehrere Kaltwasserdurchtrittsöffnungen in Umfangsrichtung hintereinander angeordnet sind. Ferner ist bevorzugt, dass auch mehrere Kaltwassereinlassöffnungen und mehrere Heißwassereinlassöffnungen in der Einlasshülse in Umfangsrichtung hintereinander angeordnet sind. In einer besonders bevorzugten Ausführungsform entspricht die Anzahl der Kaltwassereinlassöffnungen der Anzahl der Kaltwasserdurchtrittsöffnungen und die Anzahl der Heißwassereinlassöffnungen der Anzahl der Heißwasserdurchtrittsöffnungen. Bevorzugt ist also einer (Heißwasser- oder Kaltwasser-) Einlassöffnung eine (Heißwasser- oder Kaltwasser-) Durchtrittsöffnung zugeordnet.

Die Einlasshülse und die Regelhülse haben bevorzugt die gleiche Querschnittsform. Bevorzugt sind sowohl die Einlasshülse als auch die Regelhülse kreisrund ausgebildet. Prinzipiell wäre aber auch eine andere Querschnittsform möglich. Die Einlasshülse und die Regelhülse sind dabei so dimensioniert, dass die eine Hülse innerhalb der andern angeordnet sein kann. Bevorzugt ist die Regelhülse innerhalb der Einlasshülse angeordnet.

Es ist zudem bevorzugt, dass die mindestens eine Durchtrittsöffnung in der Regelhülse und die mindestens eine Einlassöffnung in der Einlasshülse die gleiche Form und bevorzugt auch die gleiche Größe aufweisen. Bevorzugt ist jedoch, dass die mindestens eine Durchtrittsöffnung und/oder die mindestens eine Einlassöffnung rechteckförmig ausgebildet sind. Die Öffnungen weisen also zueinander parallele obere und untere, in Umfangsrichtung verlaufende Kanten sowie seitliche, in Axialrichtung verlaufende Kanten auf. Hierbei kann vorgesehen sein, dass die in axialer Richtung innen liegenden Kanten der Durchtrittsöffnungen mit den in axialer Richtung außen liegenden Kanten der Einlassöffnungen paarweise die Steuerkanten ausbilden. Alternativ kann vorgesehen sein, dass die in axialer Richtung außen liegenden Kanten der Durchtrittsöffnungen mit den in axialer Richtung innen liegenden Kanten der Einlassöffnungen paarweise die Steuerkanten ausbilden.

Bevorzugt ist die Regelhülse innerhalb der Einlasshülse angeordnet. In diesem Zusammenhang ist bevorzugt, dass eine radiale Außenseite (Oberfläche) der Regelhülse an einer radialen Innenseite (Oberfläche) der Einlasshülse anliegt und die Regelhülse in der Einlasshülse axial beweglich ist. Dadurch dass die radiale Außenseite der Regelhülse an der radialen Innenseite der Einlasshülse anliegt, kann eine Leckage von Heißwasser oder Kaltwasser minimiert werden. Für eine besonders gute Verhinderung der Leckage sind die Einlasshülse und die Regelhülse erfindungsgemäß jeweils aus Keramik ausgebildet.

Die Rate des in den Mischwasserraum einfließenden Heißwassers oder Kaltwassers wird im Wesentlichen durch die Überlappung der Durchtrittsöffnung mit der zugehörigen Einlassöffnung vorgegeben. Wenn beispielsweise die Regelhülse in einer Stellung ist, in der die Heißwasserdurchtrittsöffnung mit der Heißwassereinlassöffnung nicht überlappt und die Kaltwasserdurchtrittsöffnung mit der Kaltwassereinlassöffnung überlappt, so würde nur Kaltwasser in den Mischwasserraum fließen. Wenn hingegen sowohl die mindestens eine Kaltwasserdurchtrittsöffnung mit der mindestens einen Kaltwassereinlassöffnung überlappt und die mindestens eine Heißwasserdurchtrittsöffnung mit der mindestens einen Heißwassereinlassöffnung überlappt, so würde sowohl Heißwasser als auch Kaltwasser in den Mischwasserraum fließen. Die Temperatur des Mischwassers würde somit von dem Verhältnis des Grades der Überlappungen abhängen.

Die einander zugeordneten Durchtrittsöffnungen und die Einlassöffnungen sind also insbesondere so axial zueinander beabstandet, dass sie sich in einer Regelstellung, in der das Mischungsverhältnis von Kaltwasser und Heißwasser durch die Regelhülse eingestellt wird, jeweils überlappen, während sich in einer Schließstellung, in der die Regelhülse den Heißwassereinlass und/oder den Kaltwassereinlass absperrt, nur die mindestens eine Durchtrittsöffnung und nur die mindestens eine Einlassöffnung für Kaltwasser oder für Heißwasser überlappen.

Die mindestens eine Durchtrittsöffnung der Regelhülse bildet insbesondere eine Regelsteuerkante aus, wobei die Regelsteuerkante bei einer Überführung der Regelhülse von einer Regelstellung, in der das Mischungsverhältnis von Kaltwasser und Heißwasser durch die Regelhülse eingestellt wird, in eine Schließstellung, in der die Regelhülse zumindest den Heißwassereinlass oder den Kaltwassereinlass absperrt, an einer Einlasssteuerkante vorbei bewegt wird. Anders als im Stand der Technik ist die Regelhülse also auch in der Schließstellung in beide axialen Richtungen beweglich angeordnet. Mit der vorliegenden Erfindung ist es also auch möglich, sowohl den Heißwassereinlass als auch den Kaltwassereinlass abzusperren.

Zur Kopplung der Ausdehnungsbewegung des Dehnstoffelements mit der Regelhülse kann vorgesehen sein, dass zwischen der Regelhülse und dem Dehnstoffelement mindestens eine sich durch den Mischwasserraum erstreckende Abstützgestaltung angeordnet ist. Diese Abstützgestaltung ist insbesondere einteilig mit der Regelhülse ausgebildet. Es kann aber auch vorgesehen sein, dass die Abstützgestaltung durch mindestens ein separates Bauteil realisiert ist.

In einer bevorzugten Ausführungsform liegt sowohl das Dehnstoffelement als auch eine Feder an der Abstützgestaltung an. Hierbei ist die Feder insbesondere so angeordnet, dass sie die Regelhülse und das Dehnstoffelement in Richtung des Stellelements zur manuellen Verstellung der Lage des Dehnstoffelements (und somit auch der Regelhülse) entgegenwirkt.

Zur Ausbildung eines Thermostatmischventils ist die vorstehend beschriebene Thermostatkartusche in einem, gegebenenfalls mehrteiligen Gehäuse angeordnet. Zur Abdichtung der Einlasshülse gegenüber einer Innenseite des Gehäuses kann vorgesehen sein, dass an einer radialen Außenseite der Einlasshülse mindestens eine in Umfangsrichtung verlaufende Aufnahme für eine Dichtung angeordnet ist. Insbesondere ist eine solche Aufnahme und eine solche Dichtung zwischen der mindestens einen Kaltwassereinlassöffnung und der mindestens einen Heißwassereinlassöffnung der Einlasshülse ausgebildet.

Das Gehäuse bildet dann insbesondere einen Kaltwasseranschluss zum Anschließen einer Kaltwasserleitung, einen Heißwasseranschluss zum Anschließen einer Heißwasserleitung und einen Mischwasseranschluss zum Anschließen einer Mischwasserleitung auf. Der Heißwasseranschluss ist dabei dem Heißwassereinlass der Thermostatkartusche, der Kaltwasseranschluss dem Kaltwassereinlass der Thermostatkartusche und der Mischwasseranschluss dem Mischwasserauslass der Thermostatkartusche zugeordnet.

Die Erfindung ermöglicht es, dass das Dehnstoffelement ohne Zwischenschaltung einer Überhubeinheit an dem Gehäuse oder zur Einstellung der Mischwassertemperatur an einem in dem Gehäuse verstellbar angeordneten Stellelement anliegt.

Die Erfindung sowie das technische Umfeld werden im Folgenden anhand der Figuren beispielhaft erläutert. Es zeigen schematisch
- Figur 1:: eine erste Ausführungsform einer Thermostatkartusche und
- Figur 2:: eine zweite Ausführungsform einer Thermostatkartusche.

Die in den Figuren dargestellten Thermostatkartuschen umfassen jeweils eine Einlasshülse 9, eine Regelhülse 6, ein über eine Abstützgestaltung 14 mit der Regelhülse 6 gekoppeltes Dehnstoffelement 5 und eine Feder 15.

Zur Ausbildung eines Kaltwassereinlasses 1 weist die Einlasshülse 9 mehrere in Umfangsrichtung hintereinander angeordnete Kaltwassereinlassöffnungen 10 auf. Zur Ausbildung eines Heißwassereinlasses 2 weist die Einlasshülse 9 mehrere in Umfangsrichtung hintereinander angeordnete Heißwassereinlassöffnungen 11 auf. Die Kaltwassereinlassöffnungen 10 und die Heißwassereinlassöffnungen 11 weisen jeweils eine Einlasssteuerkante 13 auf. Am Außenumfang der Einlasshülse 9 sind Aufnahmen 16 ausgebildet, in denen Dichtungen 17 angeordnet sind. Durch diese Dichtungen 17 werden der Kaltwassereinlass 1 und der Heißwassereinlass 2 in einem nicht dargestellten Gehäuse eines Thermostatventils voneinander getrennt.

Die Regelhülse 6 weist mehrere in Umfangsrichtung hintereinander angeordnete Heißwasserdurchtrittsöffnungen 7 und mehrere in Umfangsrichtung hintereinander angeordnete Kaltwasserdurchtrittsöffnungen 8 auf. Die Heißwasserdurchtrittsöffnungen 7 und die Kaltwasserdurchtrittsöffnungen 8 bilden jeweils Regelsteuerkanten 12 aus.

Innerhalb der Regelhülse 6 ist ein Mischwasserraum 4 mit einem Mischwasserauslass 3 ausgebildet. Das Dehnstoffelement 5 ist in dem Mischwasserraum 4 angeordnet.

In einem in einem Gehäuse einer Thermostatkartusche angeordneten Zustand, stützt sich das Dehnstoffelement 5 auf seiner in den Figuren links dargestellten Seite an einem (nicht dargestellten) Stellelement ab. Das manuell in axialer Richtung des Dehnstoffelements 5 verstellbare Stellelement gibt somit die Stellung des in den Figuren links dargestellten Endes des Dehnstoffelements 5 vor, wobei die Feder 15 das Dehnstoffelement 5 und die Regelhülse 6 in Richtung des Stellelements vorspannt.

Im Betrieb steht Kaltwasser an dem Kaltwassereinlass 1 an. Die Fließrate des durch den Wassereinlass in den Mischwasserraum 4 einfließenden Kaltwassers wird also durch eine Überlappung der Kaltwassereinlassöffnungen 10 und der Kaltwasserdurchtrittsöffnungen 8 vorgegeben beziehungsweise durch einen Abstand zwischen den Regelsteuerkanten 12 der Durchtrittsöffnungen zu den Einlasssteuerkanten 13 der Einlassöffnungen. Da sich das Dehnstoffelement 5 bei einer Änderung der Mischwassertemperatur ausdehnt oder zusammenzieht und somit die Regelhülse 6 in Achsrichtung innerhalb der Einlasshülse 9 verschoben wird, ändert sich die Überlappung der Einlassöffnungen und der Durchtrittsöffnungen beziehungsweise der Abstand zwischen den Regelsteuerkanten 12 und den Einlasssteuerkanten 13, sodass bei sich ändernder Kalt- und/oder Heißwassertemperatur die Mischwassertemperatur die zuvor vorgegebene Mischwassertemperatur wieder einnimmt.

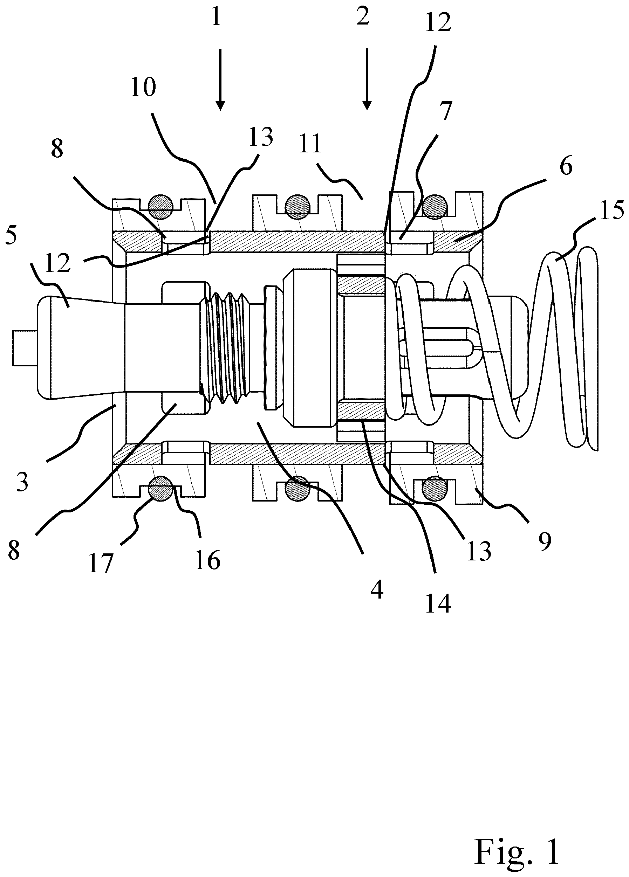

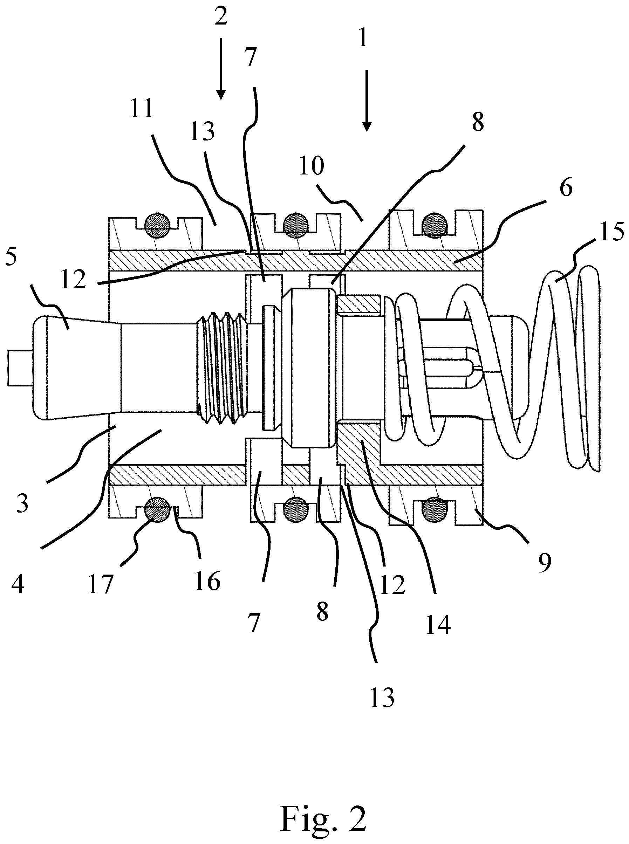

Wenn nun gewünscht ist, dass nur Heißwasser aus dem Heißwassereinlass 2 in den Mischwasserraum 4 eintritt, so kann das manuell betätigbare Stellelement des Thermostatventils entsprechend in der Figur 1 nach links und in der Figur 2 nach rechts verstellt werden, sodass die Kaltwassereinlassöffnungen 10 von der Regelhülse 6 versperrt werden. Da die Regelhülse 6 in der Einlasshülse 9 vollständig beweglich ist, ist kein Anschlag auszubilden, an dem die Regelhülse 6 in einem solchen, den Kaltwassereinlass 1 absperrenden Zustand anliegen muss. Vielmehr ist die Regelhülse 6 selbst in diesem Zustand noch axial beweglich. Somit wirken auf das Dehnstoffelement 5 keine Kräfte, die größer sind als in einer Regelstellung.

Die Erfindung ermöglicht es auch, eine Thermostatkartusche einfach durch Austausch der Regelhülse 6 an unterschiedliche Anforderungen anzupassen. So sind die Heißwasserdurchtrittsöffnungen 7 und die Kaltwasserdurchtrittsöffnungen 8 in dem Ausführungsbeispiel der Figur 2 vertauscht und mit einem geringeren axialen Abstand zueinander angeordnet als bei dem Ausführungsbeispiel der Figur 1. Dementsprechend ist aber auch die Regelsteuerkante 12 der Durchtrittsöffnungen 7, 8 an einer dem jeweiligen axialen Ende der Regelhülse 6 zugeordneten Seite der Durchtrittsöffnungen 7, 8 angeordnet, während die Regelsteuerkanten 12 bei der Ausführungsform der Figur 1 auf der dem axialen Ende abgewandten Seite der Durchtrittsöffnungen 7, 8 angeordnet sind.

### Bezugszeichenliste

- 1: Kaltwassereinlass
- 2: Heißwassereinlass
- 3: Mischwasserauslass
- 4: Mischwasserraum
- 5: Dehnstoffelement
- 6: Regelhülse
- 7: Heißwasserdurchtrittsöffnung
- 8: Kaltwasserdurchtrittsöffnung
- 9: Einlasshülse
- 10: Kaltwassereinlassöffnung
- 11: Heißwassereinlassöffnung
- 12: Regelsteuerkante
- 13: Einlasssteuerkante
- 14: Abstützgestaltung
- 15: Feder
- 16: Aufnahme
- 17: Dichtung

## Patentansprüche

1. Thermostatkartusche mit
- einem Kaltwassereinlass (1),
- einem Heißwassereinlass (2), wobei der Kaltwassereinlass (1) und der Heißwassereinlass (2) durch eine Einlasshülse (9) ausgebildet sind,
- einem Mischwasserauslass (3),
- einem Mischwasserraum (4), wobei der Mischwasserraum (4) zwischen Kaltwassereinlass (1) sowie Heißwassereinlass (2) einerseits und dem Mischwasserauslass (3) andererseits ausgebildet ist,
- einem in dem Mischwasserraum (4) angeordneten Dehnstoffelement (5) und
- einer von dem Dehnstoffelement (5) beaufschlagten Regelhülse (6),
wobei in der Regelhülse (6) mindestens eine Durchtrittsöffnung (7, 8) ausgebildet ist, durch die Heißwasser oder Kaltwasser in den Mischwasserraum (4) treten kann, **dadurch gekennzeichnet, dass** die Einlasshülse (9) und die Regelhülse (6) jeweils aus Keramik gebildet sind.

2. Thermostatkartusche nach Anspruch 1, wobei in der Regelhülse (6) mindestens eine Heißwasserdurchtrittsöffnung (7) und mindestens eine Kaltwasserdurchtrittsöffnung (8) ausgebildet ist.

3. Thermostatkartusche nach Anspruch 2, wobei die mindestens eine Heißwasserdurchtrittsöffnung (7) in axialer Richtung versetzt zu der mindestens einen Kaltwasserdurchtrittsöffnung (8) angeordnet ist.

4. Thermostatkartusche nach einem der vorhergehenden Ansprüche, wobei mehrere Heißwasserdurchtrittsöffnungen (7) in Umfangsrichtung hintereinander angeordnet sind und mehrere Kaltwasserdurchtrittsöffnungen (8) in Umfangsrichtung hintereinander angeordnet sind.

5. Thermostatkartusche nach einem der vorhergehenden Ansprüche, wobei der Kaltwassereinlass (1) und der Heißwassereinlass (2) jeweils als mindestens eine Einlassöffnung (10, 11) ausgebildet ist.

6. Thermostatkartusche nach einem der vorhergehenden Ansprüche, wobei die mindestens eine Durchtrittsöffnung (7, 8) und/oder die mindestens eine Einlassöffnung (10, 11) rechteckförmig ausgebildet ist.

7. Thermostatkartusche nach einem der vorhergehenden Ansprüche , wobei eine radiale Außenseite der Regelhülse (6) an einer radialen Innenseite der Einlasshülse (9) anliegt und die Regelhülse (6) in der Einlasshülse (9) axial beweglich ist.

8. Thermostatkartusche nach einem der vorhergehenden Ansprüche, wobei die mindestens eine Durchtrittsöffnung (7, 8) der Regelhülse (6) eine Regelsteuerkante (12) ausbildet, wobei die Regelsteuerkante (12) bei einer Überführung der Regelhülse (6) von einer Regelstellung, in der das Mischungsverhältnis von Kaltwasser und Heißwasser durch die Regehülse (6) eingestellt wird, in eine Schließstellung, in der die Regelhülse (6) den Heißwassereinlass (2) oder den Kaltwassereinlass (1) absperrt, an einer Einlasssteuerkante (13) vorbei bewegt wird.

9. Thermostatkartusche nach einem der vorhergehenden Ansprüche, wobei zwischen der Regelhülse (6) und dem Dehnstoffelement (5) mindestens eine sich durch den Mischwasserraum (4) erstreckende Abstützgestaltung (14) angeordnet ist, an der sowohl das Dehnstoffelement (5) als auch eine Feder (15) anliegt.

10. Thermostatkartusche nach einem der vorhergehenden Ansprüche, wobei an einer radialen Außenseite der Einlasshülse (9) mindestens eine in Umfangsrichtung verlaufende Aufnahme (16) für eine Dichtung (17) angeordnet ist.

11. Thermostatmischventil mit einem einen Kaltwasseranschluss, einen Heißwasseranschluss und einem Mischwasseranschluss aufweisenden Gehäuse, wobei eine Thermostatkartusche nach einem der vorhergehenden Ansprüche in dem Gehäuse angeordnet ist.

12. Thermostatmischventil nach Anspruch 11, wobei das Dehnstoffelement (5) ohne Zwischenschaltung einer Überhubeinheit an einem in dem Gehäuse verstellbar angeordneten Stellelement zur Einstellung der Mischwassertemperatur anliegt.

13. Thermostatmischventil nach einem der Ansprüche 11 oder 12, wobei die Regelhülse (6) in Richtung des Stellelements mittels einer Feder (15) federvorgespannt ist, wobei sich die Feder (15) an dem Gehäuse abstützt.

## Claims

1. Thermostat cartridge with
- a cold water inlet (1),
- a hot water inlet (2), wherein the cold water inlet (1) and the hot water inlet (2) are formed by an inlet sleeve (9),
- a mixed water outlet (3),
- a mixed water space (4), wherein the mixed water space (4) is formed between cold water inlet (1) and hot water inlet (2) on the one hand, and the mixed water outlet (3) on the other hand,
- an expansion material element (5) arranged in the mixed water space (4), and
- a regulating sleeve (6) on which the expansion material element (5) acts, wherein
in the regulating sleeve (6) at least one through opening (7, 8) is formed, through which the hot water or cold water can enter into the mixed water space (4), **characterised in that** the inlet sleeve (9) and the regulating sleeve (6) are each made of ceramic.

2. Thermostat cartridge according to claim 1, wherein formed in the regulating sleeve (6) is at least one hot water through opening (7) and at least one cold water through opening (8).

3. Thermostat cartridge according to claim 2, wherein the at least one hot water through opening (7) is arranged offset in the axial direction with regard to the at least one cold water through opening (8).

4. Thermostat cartridge according to any one of the preceding claims, wherein a plurality of hot water through openings (7) are arranged behind each other in the circumferential direction and a plurality of cold water through opening (8) are arranged behind each other in the circumferential direction.

5. Thermostat cartridge according to any one of the preceding claims, wherein the cold water inlet (1) and the hot water inlet (2) are each designed as at least one inlet opening (10, 11).

6. Thermostat cartridge according to any one of the preceding claims, wherein the at least one through opening (7, 8) and/or the at least one inlet opening (10, 11) are rectangular in design.

7. Thermostat cartridge according to any one of the preceding claims, wherein a radial outer side of the regulating sleeve (6) adjoins a radial inner side of the inlet sleeve (9) and the regulating sleeve (6) is axially moveable in the inlet sleeve (9).

8. Thermostat cartridge according to any one of the preceding claims, wherein the at least one through opening (7, 8) of the regulating sleeve (6) forms a regulating control edge (12), wherein the regulating control edge (12), on transferring of the control sleeve (6) from a regulating position, in which the mixing ratio of cold water and hot water is adjusted by the regulating sleeve (6), into a closing position, in which the regulating sleeve (6) closes off the hot water inlet (2) or the cold water inlet (1), is moved past an inlet control edge (13).

9. Thermostat cartridge according to any one of the preceding claims, wherein arranged between the regulating sleeve (6) and the expansion material element (5) is at least one supporting design (14), extending through the mixed water space (4), on which both the expansion material element (5) and also a spring (15) are in contact.

10. Thermostat cartridge according to any one of the preceding claims, wherein arranged on a radial outer side of the inlet sleeve (9) is at least one holder (16) for a seal (17) that extends in the circumferential direction.

11. Thermostat mixer valve with a housing comprising a cold water connection, a hot water connection and a mixed water connection, wherein a thermostat cartridge according to any one of the preceding claims is arranged in the housing.

12. Thermostat mixer valve according to claim 11 wherein the expansion material element (5) adjoins an adjusting element for adjusting the mixed water temperature that is adjustably arranged in the housing without the interposition of an overtravel unit.

13. Thermostat mixer value according to any one of claims 11 or 12, wherein the regulating sleeve (6) is spring-loaded by means of a spring (15) in the direction of the adjusting element, wherein the spring (15) is supported on the housing.

## Revendications

1. Cartouche thermostatique comprenant
- une entrée (1) d'eau froide,
- une entrée (2) d'eau chaude, l'entrée (1) d'eau froide et l'entrée (2) d'eau chaude étant constituées d'un manchon d'entrée (9),
- une sortie (3) d'eau mitigée,
- un espace (4) d'eau mitigée, l'espace (4) d'eau mitigée étant constitué entre l'entrée (1) d'eau froide ainsi que l'entrée (2) d'eau chaude d'une part et la sortie (3) d'eau mitigée d'autre part,
- un élément (5) en matière expansible placé dans l'espace (4) d'eau mitigée et
- un manchon de régulation (6) soumis par l'élément (5) en matière expansible,
dans le manchon de régulation (6) étant constitué au moins un orifice de passage (7, 8), à travers lequel de l'eau chaude ou de l'eau froide peut entrer dans l'espace (4) d'eau mitigée, **caractérisée en ce que** le manchon d'entrée (9) et le manchon de régulation (6) sont créés chacun en céramique.

2. Cartouche thermostatique selon la revendication 1, dans le manchon de régulation (6) étant constitués au moins un orifice de passage (7) d'eau chaude et au moins un orifice de passage (8) d'eau froide.

3. Cartouche thermostatique selon la revendication 2, l'au moins un orifice de passage (7) d'eau chaude étant placé en étant décalé en direction axiale par rapport à l'au moins un orifice de passage (8) d'eau froide.

4. Cartouche thermostatique selon l'une quelconque des revendications précédentes, plusieurs orifices de passage (7) d'eau chaude étant placés les uns derrière les autres dans la direction périphérique et plusieurs orifices de passage (8) d'eau froide étant placés les uns derrière les autres dans la direction périphérique.

5. Cartouche thermostatique selon l'une quelconque des revendications précédentes, l'entrée (1) d'eau froide et l'entrée (2) d'eau chaude étant constituées chacune sous la forme d'au moins un orifice d'entrée (10, 11).

6. Cartouche thermostatique selon l'une quelconque des revendications précédentes, l'au moins un orifice de passage (7, 8) et / ou l'au moins un orifice d'entrée (10, 11) étant constitués sous forme rectangulaire.

7. Cartouche thermostatique selon l'une quelconque des revendications précédentes, une face extérieure radiale du manchon de régulation (6) étant adjacente à une face intérieure radiale du manchon d'entrée (9) et le manchon de régulation (6) étant mobile en direction axiale dans le manchon d'entrée (9).

8. Cartouche thermostatique selon l'une quelconque des revendications précédentes, l'au moins un orifice de passage (7, 8) du manchon de régulation (6) constituant une arête de commande (12) de régulation, lors d'un transfert du manchon de régulation (6) d'une position de régulation, dans laquelle le rapport de mélange de l'eau froide et de l'eau chaude est réglé par le manchon de régulation (6), l'arête de commande (12) de régulation étant déplacée devant une arête de commande (13) d'entrée dans une position de fermeture, dans laquelle le manchon de régulation (6) ferme l'entrée (2) d'eau chaude ou l'entrée (1) d'eau froide.

9. Cartouche thermostatique selon l'une quelconque des revendications précédentes, entre le manchon de régulation (6) et l'élément (5) en matière expansible étant placé au moins un aménagement de soutien (14) s'étendant à travers l'espace (4) d'eau mitigée, auquel sont adjacents au moins l'élément (5) en matière expansible, ainsi qu'également un ressort (15).

10. Cartouche thermostatique selon l'une quelconque des revendications précédentes, sur une face extérieure radiale du manchon d'entrée (9) étant placé un logement (16) s'écoulant dans la direction périphérique pour un joint (17).

11. Mitigeur thermostatique pourvu d'un corps comportant un raccordement d'eau froide, un raccordement d'eau chaude et un raccordement d'eau mitigée, une cartouche thermostatique selon l'une quelconque des revendications précédentes étant placée dans le corps.

12. Mitigeur thermostatique selon la revendication 11, l'élément (5) en matière expansible étant adjacent sans interposition d'une unité de surcourse dans un élément de réglage placé de manière ajustable dans le corps, pour régler la température de l'eau mitigée.

13. Mitigeur thermostatique selon l'une quelconque des revendications 11 ou 12, le manchon de régulation (6) étant précontraint par ressort dans la direction de l'élément de réglage au moyen d'un ressort (15), le ressort (15) s'appuyant sur le corps.
